# EUROPEAN PATENT SPECIFICATION

(11) **EP 2 137 730 B1**
(45) Date of publication and mention of the grant of the patent: **21.07.2010**
(21) Application number: 08736131.7
(22) Date of filing: 11.04.2008
(51) Int. Cl.: G11B 7/0065, G11B 7/09, G11B 7/24

(54) **DUAL-PATH OPTICAL RECORDING MEDIA AND AN APPARATUS FOR ACCESSING THEREOF**
OPTISCHE ZWEIWEGE-AUFZEICHNUNGSMEDIEN UND ZUGANGSVORRICHTUNG DAFÜR
SUPPORTS D'ENREGISTREMENT OPTIQUES À DEUX VOIES ET APPAREIL PERMETTANT D'Y ACCÉDER

(30) Priority: 13.04.2007 US 735047; 13.04.2007 US 735058
(43) Date of publication of application: 30.12.2009
(73) Proprietor: International Business Machines Corporation, Armonk, NY 10504 (US)
(72) Inventor: WINARSKI, Daniel, James, Tucson, Arizona 85710-6237 (US); BATES, Allen, Keith, Tucson, Arizona 85716 (US); KLEIN, Craig, Anthony, Tucson, Arizona 85748 (US); HAUSTEIN, Nils, 55270 Soergenloch (DE)
(74) Representative: Waldner, Philip
(86) International application number: PCT/EP2008/054419
(87) International publication number: WO 2008/125625

(56) References cited:
- EP-A- 1 701 341
- WO-A-03/032300
- WO-A-2006/114835
- WO-A-2008/075350

## Description

### BACKGROUND OF THE INVENTION

### Technical Field

The present invention relates to optical recording media in general, and more particularly, to dual-path optical recording media. Still more particularly, the present invention relates to a method and apparatus for accessing dual-path optical recording media.

### Description of Related Art

In recent years, optical recording media with a large storage capacity have been developed for storing various types of data, including textual, graphics and voice. An optical recording medium is typically provided with a spiral or concentric track on one surface to allow laser beams to be irradiated along the track when data recording or retrieval is being performed. A track is further divided into multiple sectors that become the minimum unit for recording information.

With the Digital Versatile Disk (DVD) technology, data can be recorded onto an optical recording medium via a light modulation recording method for modulating the intensity of a laser beam irradiated on a track onto which data are to be recorded. There are many types of optical recording media, such as a phase change type optical disc, an organic pigment type optical disc, a magneto-optical disc, holographic media and the like.

EP 1 701 341 A and WO 2006/114835A disclose a recording medium and an apparatus for accessing thereof, according to the pre-characterising portions of the independent claims.

### SUMMARY OF THE INVENTION

The present disclosure provides a new type of optical recording media as claimed in claim 1 and an apparatus as claimed in claim 5 for accessing such optical recording media.

Data are written into the holographic recording layer in the form of a hologram. Data can be written to the holographic recording layer by a first laser light having a wavelength of approximately 405 nm or 532 nm. The dichronic mirror layer is reflective to the first laser light. Data can be written to the intermediate recording layer via a second laser light having a wavelength of approximately 680 nm. The intermediate recording layer includes a plurality of open hologram segments for storing hologram segments. The intermediate recording layer includes an open hologram segment directory for tracking hologram segments that have been opened. The intermediate recording layer includes a module for storing policies that dictates the closing of any of the open hologram segments.

All features and advantages of the present invention will become apparent in the following detailed written description.

### BRIEF DESCRIPTION OF THE DRAWINGS

The invention itself, as well as a preferred mode of use, further objects, and advantages thereof, will best be understood by reference to the following detailed description of an illustrative embodiment when read in conjunction with the accompanying drawings, wherein:
Figure **1** is a cross-sectional diagram of a dual-path optical recording medium, in accordance to a preferred embodiment of the present invention;
Figure **2** is a block diagram of a data recording system capable of reading and writing data to and from the optical recording medium from Figure **1****,** in accordance with a preferred embodiment of the present invention; and
Figure **3** is a detailed block diagram of various components within the optical recording medium from Figure **1****,** in accordance with a preferred embodiment of the present invention.

### DETAILED DESCRIPTION OF A PREFERRED EMBODIMENT

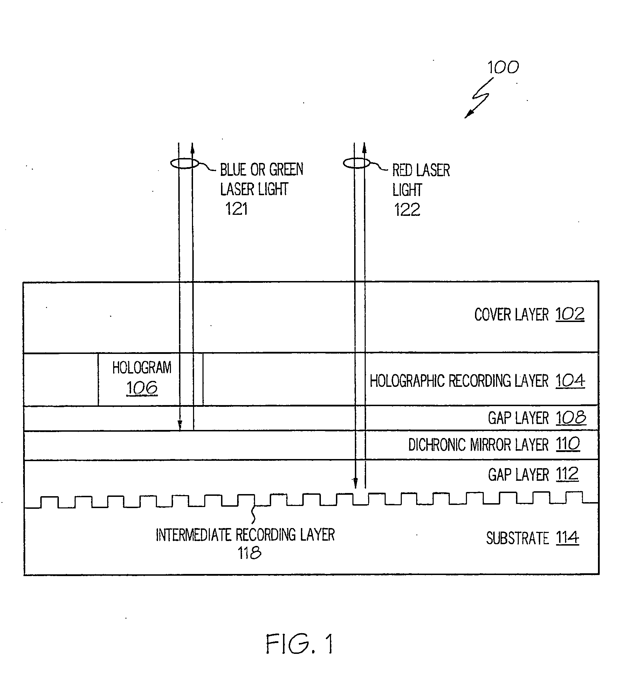

Referring now to the drawings, and specifically to Figure **1****,** there is depicted a cross-sectional diagram of a dual-path optical recording medium, in accordance with a preferred embodiment of the present invention. As shown, a dual-path optical recording medium **100** includes a substrate **114,** an intermediate recording layer **118,** a gap layer **112,** a dichronic mirror layer **110,** a gap layer **108,** a holographic recording layer **104,** and a transparent cover layer **102.** Holographic recording layer **104** and intermediate recording layer **118** are two separate recording layers of optical recording medium **100.** Holographic recording layer **104** is preferably a write-once data storage layer having a relatively high storage capacity. In contrast, intermediate recording layer **118** is a rewritable data storage layer having a relatively low storage capacity. Being coated with a phase-change material that is commonly used in conventional Digital Versatile Disks (DVDs), intermediate recording layer **118** is stamped into one surface of substrate **114** to provide lands and grooves.

Data can be written into holographic recording layer **104** in the form of a hologram, such as a hologram **106,** by a first laser light **121** having a wavelength of either 405 nm (blue) or 532 nm (green). Dichronic mirror layer **110** selectively reflects first laser light **121** such that first laser light **121** does not reach intermediate recording layer **118.** For the holography write technology, as known in the art, a laser light beam is split into two parts, a data beam and a reference beam. The data beam is encoded with data via a spatial light modulator, and the encoded data beam interferes with the reference beam to produce an interference pattern that is stored on an optical recording medium as a hologram. The hologram can subsequently be read by illuminating the hologram with the reference beam alone without need of the spatial light modulator. For simplicity, reference beam is shown in Figure **1** as first laser light **121.**

On the other hand, dichronic mirror layer **110** is selectively transparent to a second laser light **122** having a wavelength of 680 nm (which is the same wavelength of a laser light for writing data to conventional DVDs). Thus, second laser light **122** can pass through dichronic mirror layer **110** for writing data to (or reading data from) intermediate recording layer **118.**

In addition, intermediate recording layer **118** is reflective, and second laser light **122** can be reflected back to a holographic disk drive (not shown). Thus, second laser light **122** can also be employed as a servo laser by using the lands and grooves of intermediate recording layer **118** to assist a servo of a holographic disk drive to track during the writing and reading of a hologram, such as hologram **106,** in holographic recording layer **104.** Figure **1** is a cross-sectional illustration of optical recording media **100** that spins around a Z-axis, and the lands and grooves of intermediate recording layer **118** about, or are concentric with, the Z-axis.

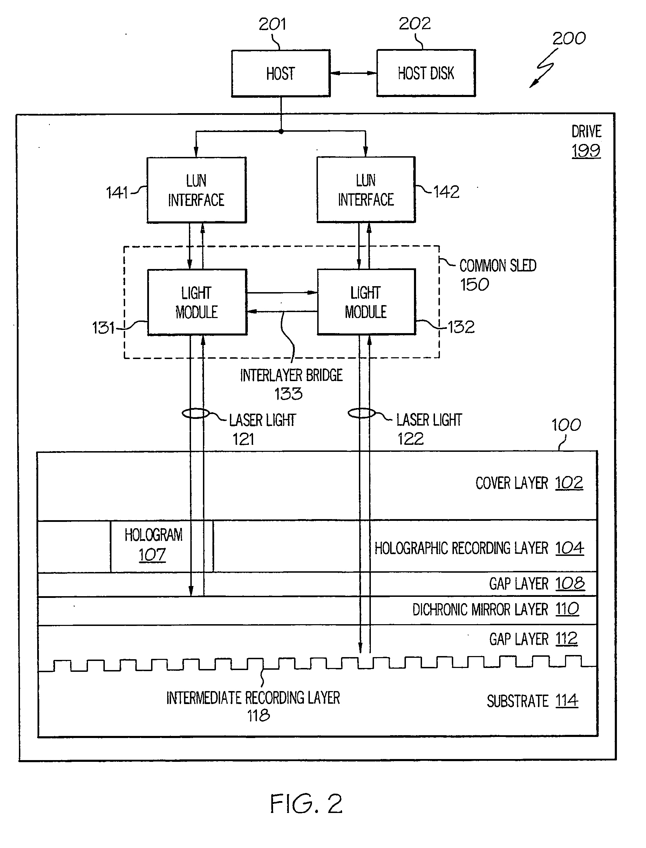

With reference now to Figure **2****,** there is illustrated a block diagram of a data recording system capable of reading and writing data to and from optical recording medium **100,** in accordance with a preferred embodiment of the present invention. As shown, a data recording system **200** includes a host **201** having a host disk **202,** a first logical unit number (LUN) interface **141,** a second LUN interface **142,** a first laser light module **131** and a second laser light module **132.** First laser module **131** and second laser module **132** are both located on a common sled (*i*.*e*., seek mechanism) **150.** First laser light module **131** and second laser light module **132** interface with host **201** via first LUN interface **141** and second LUN interface **142,** respectively. First laser light module **131** provides first laser light **121** to write (or read) holograms, such as a hologram **107,** within holographic recording layer **104.** Second laser light module **132** provides second laser light **122** to write (or read) data within intermediate recording layer **118.**

Data can be moved from intermediate recording layer **118** to holographic recording layer **104,** if necessary, based on frequent changes to the data necessitating the random access. Since first laser module **131** and second laser module **132** communicate with each other via an interlayer bridge **133,** data can be removed from intermediate recording layer **118** and be written to holographic recording layer **104** without burdening host **201.**

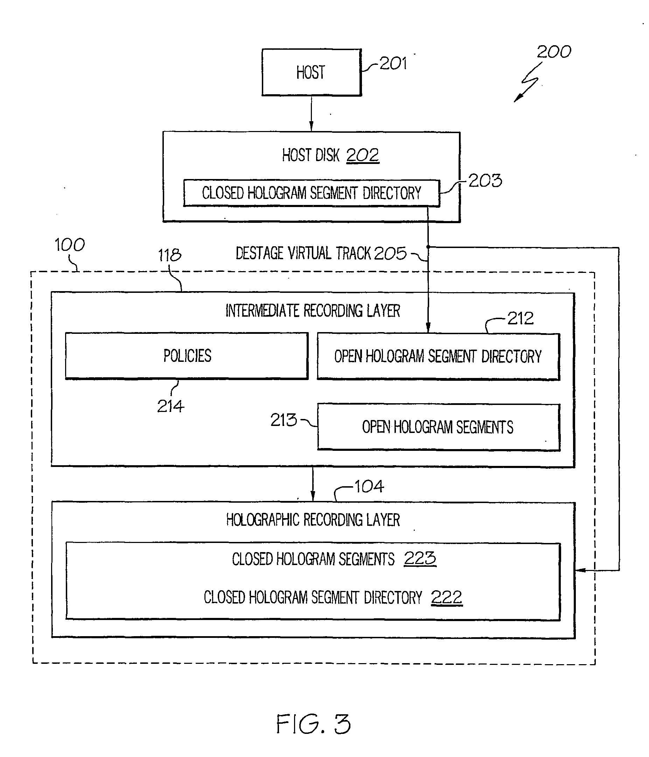

Referring now to Figure **3****,** there is illustrated a detailed block diagram of various components within optical recording medium **100,** in accordance with a preferred embodiment of the present invention. As mentioned above, optical recording medium **100** includes holographic recording layer **104** and intermediate recording layer **118.** Host **201** can write data to optical recording medium **100** through a destage virtual track **205** using destage operations. A destage operation can be a SCSI write command, a SCSI write command across Fibre Channel, an iSCSI command, a GbEN command, or any other similar command for writing data. Any data destaged by host **201** can be optionally compressed before being written into one of open hologram segments **213** within intermediate recording layer **118.** Compressed or uncompressed data for each new destage operation is placed end-on-end with the data from prior destage operations until one of open hologram segments **213** is completely filled. The size of one of open hologram segments **213** is preferably the same as the size of a hologram stored within holographic recording layer **104,** or the same size as an integral number of hologram pages within holographic recording layer **104.**

Intermediate recording layer **118** can be used as a cache memory for holographic recording layer **104** to store data on a temporary basis. But any data destined for final storage in holographic recording layer **104** will eventually be migrated from intermediate recording layer **118** to holographic recording layer **104** according to a set of user-selectable policies **214.**

The transfer of data from intermediate recording layer **118** to holographic recording layer **104** can be registered at host **201** (so host **201** knows where to find the data) by updating a closed holographic segment directory **203** within host disk **202** after the data have been transferred.

An open hologram segment directory **212** is maintained in intermediate recording layer **118** for each one of open holographic segments **213.** Open hologram segment directory **212** records which tracks are being stored in open hologram segments **213.** After an open holographic **212** and open hologram segments **213** have been closed, both closed hologram segment directory **222** and closed hologram segments **223** are then written to holographic recording layer **104,** by passing them across interlayer bridge **133** that serves as a communication path between holographic recording layer **104** and intermediate recording layer **118.** Closed holographic directory **222** is also stored in closed holographic directory 203 on host disk **202** so that host **201** knows how to find the respective one of closed holographic segments **223.**

Any of open hologram segments **213** can be closed according to policies **214.** The hologram segment closing policies under policies **214** may include parameters as follows:

### I. A maximum time that a hologram segment can be left open

The hologram segment open time starts when the first data is written to intermediate recording layer **118.** If the maximum time is not exceeded, but the open hologram segment **213** is full, the hologram segment can be closed and be written to holographic recording layer **104** from intermediate recording layer **118** via interlayer bridge **133.** If the maximum time is exceeded and the open hologram segment **213** is not filled up to the segment capacity limit, the remaining space can be filled with a pad-pattern (*i*.*e*., a non-data pattern), and then the hologram segment is closed and the data are written to holographic recording layer **104.** Any hologram segment with a pad-pattern is marked "not full" in a closed hologram segment directory **203** within host disk **202** as well as closed hologram segment directory **222** within holographic recording layer **104.** Otherwise, the non-data pattern used for padding may also include some error correction code that are capable of providing additional protection to the data in hologram segments.

If new data arrives for a "not full" but closed hologram segment **223,** that closed hologram segment **223** is retrieved from holographic recording layer **104** via interlayer bridge **133** to intermediate recording layer **118,** to be re-opened. The new data is then appended to the now open hologram segment **213,** by overwriting the pad-pattern. The hologram segment is subsequently re-closed when the hologram segment is either completely filled or the maximum time is exceeded again.

This policy might be valuable to the credit card industry, where each credit card user has an open hologram segment for tracking his/her purchases for a given credit card. The open hologram segment is created at the beginning of each billing period or the first charge after the beginning of the billing period, and then closed at the end of that billing period.

### II. A threshold capacity for closing a hologram segment

If the threshold capacity is exceeded, the hologram segment is closed and data are written to holographic layer **104.** The threshold capacity may be specified in holographic pages or in conventional storage units. The threshold of holographic pages is preferred when each holographic page holds a predefined capacity and an integral number of pages is specified as the threshold.

### III. A close hologram segment command issued by a user

If a hologram segment is not full when a close hologram segment command is issued by a user, the remaining space is padded and new data causes a retrieval of the hologram segment and the new data are appended over the pad-pattern (same steps as policy I). A force closure of open hologram segments **213** may also be invoked in response to a power outage or impending disaster, such as a fire or hurricane.

### IV. Only a limited number of open hologram segments is permitted

When too many open hologram segments **213** exist, the least recently used (LRU) hologram segments are closed first, as needed, to allow the creation of new holographic segments. Alternatively, too many open hologram segments **213** can trigger an aggregation of many partially-filled open hologram segments **213** into a few completely filled open hologram segments **213,** which then may be closed under Policy I.

### V. When data compression is allowed

A variant of this policy is that data in an open hologram segment **213** is not compressed until that hologram segment reaches a capacity threshold, such as 90% filled. Once that threshold has been reached, data are compressed on-demand in order to make room for additional data. This policy is designed to mitigate the amount of padding used in policy I.

### VI. Aggregating all versions of a file in one hologram segment

The storage of multiple versions of a file allows a complete historical record of changes made to the file. Thus, this policy is a logical form of holographic write-once-read-many (WORM), where multiple versions of a file are saved rather than overwritten. The advantage of this policy is that all versions are stored in a common location so that a user does not have to engage in multiple accesses of a holographic medium to retrieve different versions. This policy may be valuable for the retention of financial and legal records.

### VII. Mirroring between hologram segments

When a file can be mirrored between two hologram segments - for redundant array of independent disk (RAID)-1 emulation, if one hologram segment cannot be read from a holographic medium, the same file can be accessed via the mirrored hologram segment.

### VIII. Striping data across multiple hologram segments

Information in three or more hologram segments may be spread into RAID stripes with parity stored in one hologram segment for a RAID-3 or RAID-4 emulation, or with parity spread across several hologram segments for a RAID-5 emulation. The closed hologram directory **222** and closed hologram segments **223** can be written into holographic recording layer **104** as a single hologram or a single group of holograms, and the newly closed hologram directory **222** is copied to host **201** in order to update overall hologram segment directory **203** stored within host disk **202.** At this point, intermediate recording layer **118** ceases to retain any information about the hologram segment that has just been closed in order to make room for new open segments **213** and open segment directories **212.**

More than one policy within policies **214** may be activated simultaneously. Although policies **214** can be executed within host **201,** it is preferable for policies **214** to be executed within a drive **199** so that host **201** is not burdened by policy executions.

Data can be written by host **201** separately to intermediate recording layer **118** using second LUN interface **142** (from Figure **2**) or to holographic recording layer **104** using first LUN interface **141** (from Figure **2**) via destage virtual track **205.** For example, fossilized (such as quiescent or dormant) data may be written directly to holographic recording layer **104,** bypassing intermediate recording layer **118.** Data which is active and may be frequently changed may be first written to intermediate recording layer **118,** which then forms a cache for holographic recording layer **104.** Once an activity has deemed to be quiescent, the data may be migrated from intermediate recording layer **118** to holographic recording layer **104,** via interlayer bridge **133.**

Alternately, if there is a problem writing closed hologram segments **223** from host **201** directly to holographic layer **104,** that data may be temporarily written as open hologram segments **213** from LUN interface **141** across interlayer bridge **133** to intermediate recording layer **118.** Later, once the problem is resolved, the data may be migrated to the original destination of holographic recording layer **104,** as closed hologram segments **223,** again by use of interlayer bridge **133.**

## Claims

1. A dual-path optical recording medium comprising:
a substrate;
an intermediate recording layer (118) stamped into one surface of said substrate to provide lands and grooves, wherein said intermediate recording layer is a rewritable data storage layer having a relatively low storage capacity;
a holographic recording layer (104) is a write-once data storage layer having a relatively high storage capacity; and
a dichronic mirror layer (110) located between said holographic recording layer and said intermediate recording layer;
**characterized by:**
wherein said intermediate recording layer includes a plurality of open hologram segments for storing hologram segments, where an open hologram segment is a segment for which data is being written; and
wherein said intermediate recording layer includes an open hologram segment directory (212) for tracking hologram segments (213) that have been opened, and said intermediate recording layer includes a module for storing policies (214) that govern the closing of any of said open hologram segments wherein closed hologram segments are written to the holographic recording layer (104).

2. The recording medium of Claim 1, wherein one or more of the following:
i) data are written into said holographic recording layer in the form of a hologram;
ii) data can be written to said holographic recording layer by a first laser light having a wavelength of approximately 405 nm or 532 nm; or
iii) data can be written to said intermediate recording layer via a second laser light having a wavelength of approximately 680 nm.

3. The recording medium of Claim 1, wherein said holographic recording layer includes a plurality of closed hologram segments (223) for storing said open hologram segments after they have been closed.

4. The recording medium of Claim 1, wherein said holographic recording layer includes a closed hologram segment directory (222) for storing said open hologram segment directory after it has been closed.

5. An apparatus for accessing a dual-path optical recording medium, said apparatus comprising:
a first logical unit number (LUN) interface (141) and a second LUN interface (142);
a first light module (131), coupled to said first LUN interface, for generating a first laser light; and
a second light module (132), coupled to said second LUN interface, for generating a second laser light;
**characterized by:**
wherein said apparatus further includes an interlayer bridge (133) connected between said first and second light modules for allowing data to be transferred directly from one recording layer to another recording layer of said dual-path optical recording medium without going through a host computer.

6. The apparatus of Claim 5, wherein one of the following:
i) said first laser light has a wavelength of approximately 405 nm or 532 nm;
ii) said second laser light has a wavelength of approximately 680 nm; or
iii) said first and second light modules are located on a common sled.

7. The apparatus of Claim 5, wherein said dual-path optical recording medium includes
a substrate (114);
an intermediate recording layer (118) located on one surface of said substrate to be accessed by said second laser light; and
a holographic recording layer (104) to be accessed by said first laser light.

8. The apparatus of Claim 7, wherein one or more of the following:
i) said dual-path optical recording medium further includes a dichronic mirror layer (110) located between said holographic recording layer and said intermediate recording layer;
ii) said intermediate recording layer is a rewritable data storage layer having a relatively low storage capacity;
iii) said holographic recording layer is a write-once data storage layer having a relatively high storage capacity.

## Patentansprüche

1. Optisches Zweiwege-Aufzeichnungsmedium, das Folgendes umfasst:
ein Substrat;
eine in eine Oberfläche des Substrats eingeprägte Aufzeichnungs-Zwischenschicht (118) zum Bereitstellen von Erhebungen und Mulden, wobei es sich bei der Aufzeichnungs-Zwischenschicht um eine wiederbeschreibbare Datenspeicherschicht mit einer relativ niedrigen Speicherkapazität handelt;
eine holografische Aufzeichnungsschicht (104), bei der es sich um eine einmal beschreibbare Datenspeicherschicht mit einer relativ hohen Speicherkapazität handelt; und
eine zwischen der holografischen Aufzeichnungsschicht und der Aufzeichnungs-Zwischenschicht angeordnete dichroitische Spiegelschicht (110);
**dadurch gekennzeichnet,**
**dass** die Aufzeichnungs-Zwischenschicht eine Vielzahl offener Hologrammsegmente zum Speichern von Hologrammsegmenten beinhaltet, wobei es sich bei einem offenen Hologrammsegment um ein Segment handelt, in das gerade Daten geschrieben werden; und
**dass** die Aufzeichnungs-Zwischenschicht ein Verzeichnis (212) für offene Hologrammsegmente zum Nachverfolgen bereits geöffneter Hologrammsegmente (213) und dass die Aufzeichnungs-Zwischenschicht ein Modul zum Speichern von Verfahrensvorschriften (214) beinhaltet, welche das Schließen eines der offenen Hologrammsegmente regeln,
wobei geschlossene Hologrammsegmente in die holografische Aufzeichnungsschicht (104) geschrieben werden.

2. Aufzeichnungsmedium nach Anspruch 1, für das eine oder mehrere der folgenden Bedingungen gelten:
i) Daten werden in Form eines Hologramms in die holografische Aufzeichnungsschicht geschrieben;
ii) Daten können durch ein erstes Laserlicht mit einer Wellenlänge von ungefähr 405 nm oder 532 nm in die holografische Aufzeichnungsschicht geschrieben werden; oder
iii) Daten können durch ein zweites Laserlicht mit einer Wellenlänge von ungefähr 680 nm in die Aufzeichnungs-Zwischenschicht geschrieben werden.

3. Aufzeichnungsmedium nach Anspruch 1, wobei die holografische Aufzeichnungsschicht eine Vielzahl von geschlossenen Hologrammsegmenten (223) beinhaltet, um die offenen Hologrammsegmente zu speichern, nachdem sie geschlossen worden sind.

4. Aufzeichnungsmedium nach Anspruch 1, wobei die holografische Aufzeichnungsschicht ein Verzeichnis (222) für geschlossene Hologrammsegmente beinhaltet, um das Verzeichnis für offene Hologrammsegmente zu speichern, nachdem es geschlossen wurde.

5. Vorrichtung zum Zugreifen auf ein optisches Zweiwege-Aufzeichnungsmedium, wobei die Vorrichtung Folgendes umfasst:
eine erste LUN-Schnittstelle (Schnittstelle für eine erste Logikeinheitennummer) (141) und eine zweite LUN-Schnittstelle (142);
ein erstes Lichtmodul (131) zum Erzeugen eines ersten Laserlichts, das mit der ersten LUN-Schnittstelle verbunden ist; und
ein zweites Lichtmodul (132) zum Erzeugen eines zweiten Laserlichts, das mit der zweiten LUN-Schnittstelle verbunden ist;
**dadurch gekennzeichnet,**
**dass** die Vorrichtung ferner eine zwischen das erste und das zweite Lichtmodul geschaltete Schichtübertragungsbrücke (133) beinhaltet, damit Daten direkt von einer Aufzeichnungsschicht zu einer anderen Aufzeichnungsschicht des optischen Zweiwege-Aufzeichnungsmediums übertragen werden können, ohne einen Hostcomputer zu durchlaufen.

6. Vorrichtung nach Anspruch 5, für die eine der folgenden Bedingungen gilt:
i) das erste Laserlicht weist eine Wellenlänge von ungefähr 405 nm oder 532 nm auf;
ii) das zweite Laserlicht weist eine Wellenlänge von ungefähr 680 nm auf; oder
iii) das erste und das zweite Lichtmodul befinden sich auf einem gemeinsamen Schlitten.

7. Vorrichtung nach Anspruch 5, wobei das optische Zweiwege-Aufzeichnungsmedium Folgendes beinhaltet:
ein Substrat (114);
eine auf einer Oberfläche des Substrats angeordnete Aufzeichnungs-Zwischenschicht (118), auf die das zweite Laserlicht zugreifen soll; und
eine holografische Aufzeichnungsschicht (104), auf die das zweite Laserlicht zugreifen soll.

8. Vorrichtung nach Anspruch 7, für die eine oder mehrere der folgenden Bedingungen gelten:
i) das optische Zweiwege-Aufzeichnungsmedium beinhaltet ferner eine zwischen der holografischen Aufzeichnungsschicht und der Aufzeichnungs-Zwischenschicht angeordnete dichroitische Spiegelschicht (110);
ii) bei der Aufzeichnungs-Zwischenschicht handelt es sich um eine wiederbeschreibbare Datenspeicherschicht mit einer relativ niedrigen Speicherkapzität;
iii) bei der holografischen Aufzeichnungsschicht handelt es sich um eine einmal beschreibbare Datenspeicherschicht mit einer relativ hohen Speicherkapazität.

## Revendications

1. Support d'enregistrement optique à deux voies, comprenant :
un substrat ;
une couche d'enregistrement intermédiaire (118), estampée dans une surface du substrat pour fournir des ilots et des gorges, dans lequel ladite couche d'enregistrement intermédiaire est une couche de stockage de données réinscriptible ayant une capacité de stockage relativement faible,
une couche d'enregistrement holographique (104) est une couche de stockage de données à une seule écriture ayant une capacité de stockage relativement élevée ; et
une couche formant miroir dichroïque (110) disposée entre ladite couche d'enregistrement holographique et ladite couche d'enregistrement intermédiaire,
**caractérisé par le fait que** :
ladite couche d'enregistrement intermédiaire comprend une pluralité de segments d'hologramme ouverts pour stocker des segments d'hologramme, dans lequel un segment d'hologramme ouvert est un segment pour lequel des données ont été écrites ; et
dans lequel ladite couche d'enregistrement intermédiaire comprend un répertoire des segments d'hologramme ouverts (212), pour localiser des segments d'hologramme (213) ayant été ouverts, et ladite couche d'enregistrement intermédiaire comprend un module pour stocker des règles (214) gouvernant la fermeture d'un quelconque desdits segments d'hologramme ouverts, dans lequel des segments d'hologramme fermés sont écrits sur la couche d'enregistrement holographique (104).

2. Support d'enregistrement selon la revendication 1, dans lequel on a l'une ou plusieurs des possibilités suivantes :
i) des données sont écrites dans ladite couche d'enregistrement holographique, sous la forme d'un hologramme ;
ii) des données peuvent être écrites sur ladite couche d'enregistrement holographique, par une première lumière laser ayant une longueur d'onde d'à peu près 405 nm ou 532 nm ; ou
iii) des données peuvent être écrites sur ladite couche d'enregistrement intermédiaire, via une deuxième lumière laser, ayant une longueur d'onde d'à peu près 680 nm.

3. Support d'enregistrement selon la revendication 1, dans lequel ladite couche d'enregistrement holographique comprend une pluralité de segments d'hologramme fermés (223), pour stocker lesdits segments d'hologramme ouverts après qu'ils aient été fermés.

4. Support d'enregistrement selon la revendication 1, dans lequel ladite couche d'enregistrement holographique comprend un répertoire des segments d'hologramme fermés (222), pour stocker ledit répertoire des segments d'hologramme ouverts après qu'ils aient été fermés.

5. Appareil pour accéder à un support d'enregistrement optique à deux voies, ledit appareil comprenant :
une première interface de numéro identifiant d'unité logique (LUN) (141) et une deuxième interface LUN (142) ;
un premier module de lumière (131), couplé à ladite première interface LUN, pour générer une première lumière laser ; et
un deuxième module de lumière (132), couplé à ladite deuxième interface LUN, pour générer une deuxième lumière laser ;
**caractérisé en ce que** :
ledit appareil comprend en outre un pont intercouche (133) connecté entre lesdits premier et deuxième modules de lumière, pour permettre aux données d'être transférées directement d'une couche d'enregistrement à une autre couche d'enregistrement dudit support d'enregistrement optique à deux voies, sans passer par un ordinateur hôte.

6. Appareil selon la revendication 5, dans lequel on a les possibilités suivantes :
i) ladite première lumière laser présente une longueur d'onde d'à peu près 405 nm ou 532 nm ;
ii) ladite deuxième lumière laser présente une longueur d'onde d'à peu près 680 nm ; ou
iii) lesdits premier et deuxième modules sont disposés sur un traîneau commun.

7. Appareil selon la revendication 5, dans lequel ledit support d'enregistrement optique à deux voies comprend un substrat (114) ;
une couche d'enregistrement intermédiaire (118), disposée sur une surface dudit substrat, devant faire l'objet d'un accès par ladite deuxième lumière laser ; et
une couche d'enregistrement holographique (104), devant faire l'objet d'un accès par ladite première lumière laser.

8. Appareil selon la revendication 7, dans lequel on a un ou plusieurs des possibilités suivantes :
i) ledit support d'enregistrement optique à deux voies comprend en outre une couche formant miroir dichroïque (110), disposée entre ladite couche d'enregistrement holographique et ladite couche d'enregistrement intermédiaire ;
ii) ladite couche d'enregistrement intermédiaire est une couche de stockage de données réinscriptible ayant une capacité de stockage relativement faible
iii) ladite couche d'enregistrement holographique est une couche de stockage de données à une seule écriture, ayant une capacité de stockage relativement élevée.
